# FASCICULE DE BREVET EUROPEEN

(11) **EP 1 579 112 B1**
(45) Date de publication et mention de la délivrance du brevet: **16.05.2007**
(21) Numéro de dépôt: 03799686.5
(22) Date de dépôt: 22.12.2003
(51) Int. Cl.: F02K 1/62, F02K 1/72

(54) **INVERSEUR DE POUSSEE A GRILLES DE DEFLECTION OPTIMISEES**
SCHUBUMKEHRVORRICHTUNG MIT OPTIMIERTEM STRAHLUMKEHRGITTER
THRUST REVERSER COMPRISING OPTIMISED DEFLECTOR GRATINGS

(30) Priorité: 24.12.2002 FR 0216634
(43) Date de publication de la demande: 28.09.2005
(73) Titulaire: AIRCELLE, 76700 Gonfreville l'Orcher (FR)
(72) Inventeur: BLIN, Laurent, F-76310 SAINTE ADRESSE (FR); CAZUC, Xavier, F-76610 LE HAVRE ROUELLES (FR); VAUCHEL, Guy, F-76610 LE HAVRE (FR)
(74) Mandataire: Chevalier, Renaud Philippe
(86) Numéro de dépôt international: PCT/FR2003/003868
(87) Numéro de publication internationale: WO 2004/059157

(56) Documents cités:
- WO-A-94/24430
- FR-A- 2 096 650
- US-A- 3 076 309
- US-A- 4 026 105
- US-A- 4 731 991
- US-A- 4 778 110

## Description

### Domaine de l'invention

La présente invention concerne les dispositifs d'inversion de poussée pour turboréacteur à double flux et elle se rapporte plus particulièrement à un perfectionnement aux grilles de dérivation de flux, dites aussi de déflection, utilisées dans de tels dispositifs.

### Etat de la technique

Classiquement, un turboréacteur à double flux est équipé d'un conduit en arrière de la soufflante dont le but est de canaliser le flux secondaire dit froid. Ce conduit est constitué d'une paroi interne qui entoure la structure du moteur proprement dite en arrière de la soufflante, et d'une paroi externe dont la partie amont vient en continuité du carter moteur qui entoure cette soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple. Par contre, dans le cas de nacelles dites à flux séparés, la paroi externe ne canalise que le flux secondaire.

Une paroi peut également caréner l'extérieur du moteur, c'est à dire l'extérieur du carter qui entoure la soufflante et l'extérieur de la paroi extérieure du conduit précité, ceci dans le but de minimiser la traînée de l'ensemble propulsif, notamment dans le cas d'ensembles propulsifs rapportés sur l'extérieur d'aéronef, comme ceux attachés sur ou sous les ailes ou à l'arrière du fuselage par exemple.

Le document WO 94/24430 décrit un dispositif à grilles pour la formation d'un flux d'inversion selon le préambule de revendication 1.

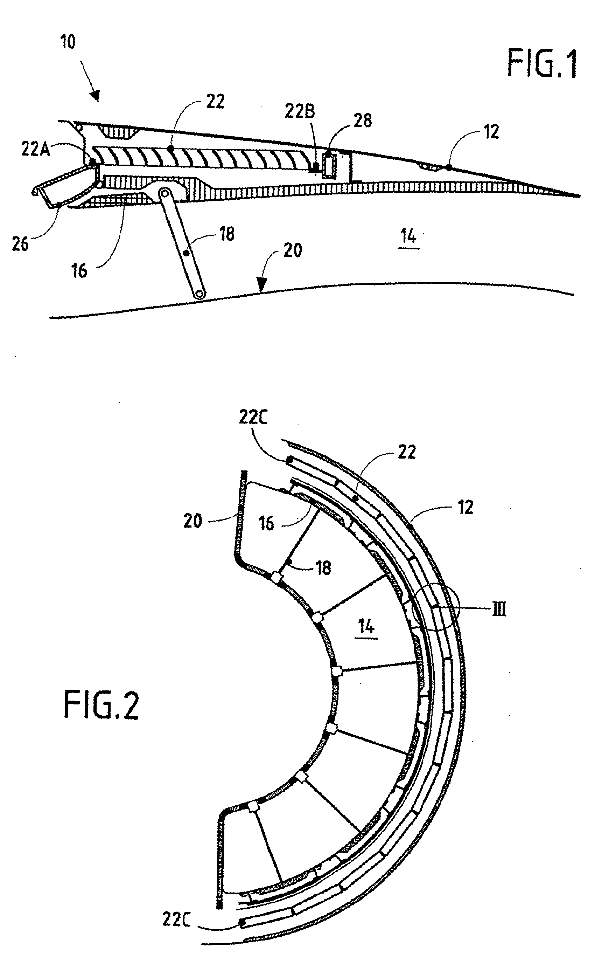

Les figures 1 à 3 illustrent un exemple connu de réalisation d'un inverseur de poussée à grilles de déflection appliqué à un turboréacteur à double flux.

Un tel inverseur de poussée de turboréacteur 10 comporte un capotage mobile 12, constitué avantageusement de deux demi-parties cylindriques et formant, lors du fonctionnement du turboréacteur en poussée directe, tout ou partie de l'extrémité aval de la paroi externe du canal annulaire 14 de circulation de la veine de flux secondaire, et susceptible d'être déplacé axialement en direction aval au moyen d'un système de commande (non représenté) comportant par exemple des vérins fixés sur la partie amont de l'inverseur. Un déplacement du capotage vers l'aval entraîne le pivotement d'une pluralité de volets 16 par l'intermédiaire de biellettes de liaison 18 reliées à un point d'articulation de la paroi interne 20 du canal annulaire 14, ces volets venant obturer le canal et dévier le flux pour former un flux d'inversion dont le guidage est obtenu au moyen d'un dispositif à grilles 22 disposé sur la périphérie externe de ce canal et dont les grilles montées cote à cote sont découvertes après déplacement du capotage vers l'aval. Ces grilles comportent des aubages plus ou moins incurvés, dans une ou deux directions, selon la direction recherchée pour le flux d'inversion. En effet, lors de l'inversion de poussée, il est nécessaire d'orienter de façon déterminée la direction du flux passant au travers de certaines grilles du dispositif pour que l'air ne vienne pas impacter des zones de l'avion non désirées et évite le contact direct sur le sol, afin de minimiser voire annuler la possibilité d'ingestion par ricochet de cet air par le moteur générateur de ce flux ou d'un moteur proche. Cette orientation particulière des aubages évite en outre l'envoie de tout obstacle présent au niveau du tarmac sur des structures de l'avion, par le même phénomène de ricochet.

Dans le dispositif à grilles illustré, chaque grille est montée dans un cadre parallélépipédique pour d'une part en faciliter l'installation et le remplacement sur la structure de la nacelle, notamment lors d'opérations de maintenance où le temps d'intervention a une très grande importance et donc doit être le plus réduit possible, et d'autre part assurer un meilleur aérodynamisme du flux d'inversion car la largeur de passage d'air doit être approximativement la même en entrée et en sortie, dans l'épaisseur de la grille. A cet effet, la configuration aérodynamique des aubes transversales 24A (les aubes longitudinales 24B étant droites) des grilles est définie pour transformer le flux de poussée passant aux travers d'elles en un flux d'inversion dirigé avantageusement vers l'avant de la nacelle.

La fixation de chaque grille sur la structure de la nacelle est assurée classiquement par des vis 23 traversant d'une part un bord transversal avant 22A et venant se fixer dans une partie structurale avant 26 de l'inverseur et d'autre part par un bord transversal arrière 22B venant se fixer dans une partie structurale arrière 28 de cet inverseur. Par contre, les grilles adjacentes ou mitoyennes ne sont pas liées entre-elles par leurs bords longitudinaux parallèles 22C et un jeu latéral 30 apparaît donc entre chaque grille du dispositif à grilles de l'inverseur de poussée.

En prenant en compte les tolérances de fabrication et d'installation, ce jeu peut s'avérer suffisamment large pour générer une fuite d'air 32 dans une direction verticale, voire dirigée vers l'arrière de la nacelle, particulièrement importante lors de l'inversion de poussée et venir réduire l'efficacité des deux flux d'inversion 34 sortant des grilles directement de part et d'autre de cette fuite 32, produisant ainsi une poussée vers l'arrière de la nacelle de nature à réduire fortement les performances de freinage aérodynamique de l'avion.

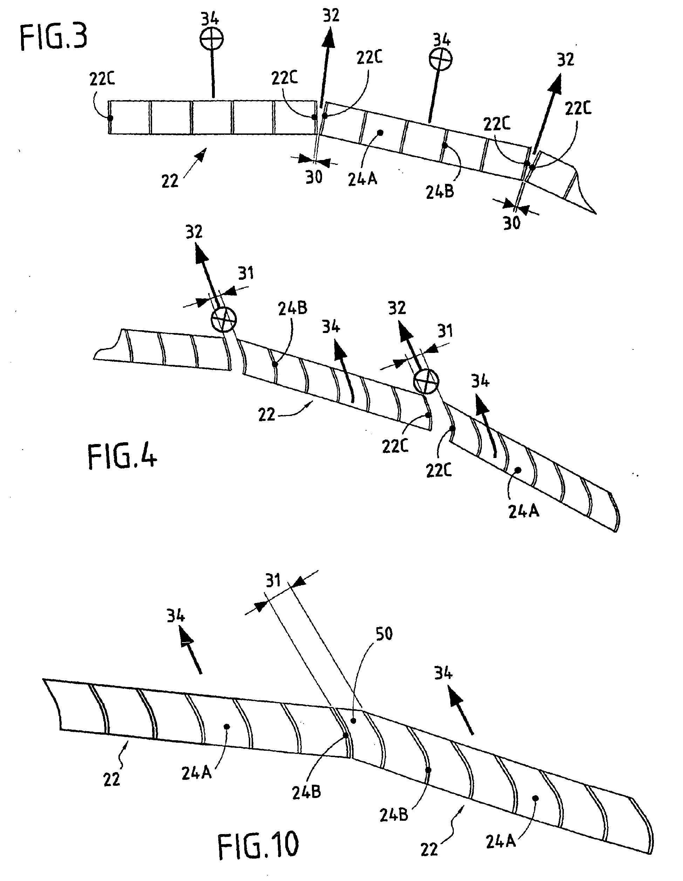

Ce problème de fuite est aggravé avec une configuration de grilles à sortie vers le coté telle qu'illustrée à la figure 4 et dans laquelle, selon la direction d'inversion de flux recherchée, les aubes longitudinales 24B de ces grilles sont plus ou moins incurvés dans une même direction.

Dans cette configuration, le jeu 31 est supérieur à celui correspondant à une grille à base parallélépipédique (exemple de la figure 3) et l'effet négatif du flux de fuite 32 sur les flux d'inversion directement à son contact se trouve de ce fait amplifié. Pour compenser cet effet négatif, il est classiquement procédé à un arrangement angulaire des aubes transversales 24A et suivant la nécessité, des aubes longitudinales 24B vers l'avant de la nacelle beaucoup plus fermé, obligeant une augmentation de la longueur des grilles pour en conserver la même section de passage d'air, ce qui implique une augmentation de la masse de nombreux composants notamment les vérins, touchant par la même à la fiabilité de ces organes.

### But et objet de l'invention

L'invention a pour objet un dispositif à grilles de déflection qui pallie ces inconvénients. Un but de l'invention est aussi de proposer un inverseur de poussée qui présente une facilité d'installation et de remplacement ou de maintenance de tout composant de la nacelle, notamment des grilles. En effet, en fonction de la position de la nacelle sur les ailes de l'avion, par exemple pour un quadrimoteur, la configuration du flux d'inversion peut être différente d'une nacelle à l'autre. Cela oblige à prévoir une panoplie de grilles de configuration d'aubes différentes mais adaptables et interchangeables entre-elles.

Ces buts sont atteints par un dispositif selon la revendication 1, c'est à dire par un dispositif à grilles pour la formation d'un flux d'inversion à partir d'un flux de poussée de turboréacteur, comportant une pluralité de grilles de dérivation de flux disposées cote à cote à la périphérie externe d'un canal annulaire de circulation du flux de poussée, chaque grille étant constituée par une pluralité d'aubes internes transversales et d'aubes internes longitudinales entrecroisées, deux grilles adjacentes étant séparées par un jeu latéral générant un flux de fuite, caractérisé en ce qu'il comporte des moyens pour rediriger ledit flux de fuite dans une direction augmentant l'efficacité dudit flux d'inversion.

Ainsi, les fuites sont limitées et on obtient une re-direction du flux sortant des grilles vers la direction désirée.

Avantageusement, les moyens pour rediriger le flux de fuite comportent des d'appendices aérodynamiques montés sur au moins ou sur les deux bords externes longitudinaux de chaque grille, ledit bord externe longitudinal de grille étant constitué de préférence par une aube longitudinale.

De préférence, lesdits appendices aérodynamiques comportent une pluralité de bouts d'aubes transversaux et chaque bout d'aube de ladite pluralité de bouts d'aubes transversaux d'une grille déterminée comporte une courbure identique ou différente de celle des aubes internes transversales de ladite grille. Chaque bout d'aube de ladite pluralité de bouts d'aubes transversaux d'une grille déterminée peut être disposé dans la continuité des aubes internes transversales de ladite grille et ladite pluralité de bouts d'aubes transversaux peut être disposée en nombre différent par rapport aux aubes internes transversales d'une même grille.

Selon une réalisation avantageuse, le nombre et la courbure de ladite pluralité de bouts d'aubes transversaux sont identiques pour toutes les grilles du dispositif quels que soient le nombre et la courbure des aubes internes transversales. Ainsi, il est possible d'adapter des appendices aérodynamiques à l'extérieur des aubes galbées longitudinales dans l'enveloppe initiale parallélépipédique et de permettre l'installation de n'importe quelle configuration de grilles entre-elles.

### Brève description des dessins

D'autres caractéristiques et avantages de l'invention seront mieux compris à la lecture de la description qui va suivre de modes de réalisation préférentiels de l'invention en référence aux dessins annexés sur lesquels :
La figure 1 représente une demi vue schématique, en coupe longitudinale, d'un inverseur de poussée à grilles de déflection selon l'art antérieur représenté en position fermée,
La figure 2 représente une demi vue schématique, en coupe dans le plan des grilles, de l'inverseur de poussée de la figure 1.
La figure 3 représente une loupe de la figure 2 illustrant la disposition mitoyenne des grilles de déflection,
La figure 4 représente une disposition semblable à celle de la figure 3 appliquée à une variante d'art antérieur,
La figure 5A représente une demi vue schématique, en coupe longitudinale, d'un inverseur de poussée à grilles de déflection selon un premier exemple de réalisation de l'invention représenté en position semi-ouvert,
La figure 5B illustre une vue de dessus partielle de l'inverseur de poussée de la figure 5A limitée à son dispositif à grilles,
La figure 5C représente une disposition semblable à celle de la figure 3 appliquée au premier exemple de réalisation de l'invention des figures 5A et 5B,
La figure 6 représente une disposition semblable à celle de la figure 3 appliquée à un deuxième exemple de réalisation de l'invention,
La figure 7 représente une loupe d'une partie d'extrémité d'une grille de déflection illustrée à la figure 6,
La figure 8 représente une disposition latérale en perspective de deux grilles mitoyennes selon le deuxième exemple de réalisation de l'invention,
La figure 9 représente une disposition latérale en perspective de deux grilles mitoyennes selon une variante du deuxième exemple de réalisation de l'invention, et
La figure 10 représente une disposition semblable à celle de la figure 3 appliquée à un troisième exemple de réalisation de l'invention.

### Description d'un mode préférentiel de réalisation de l'invention

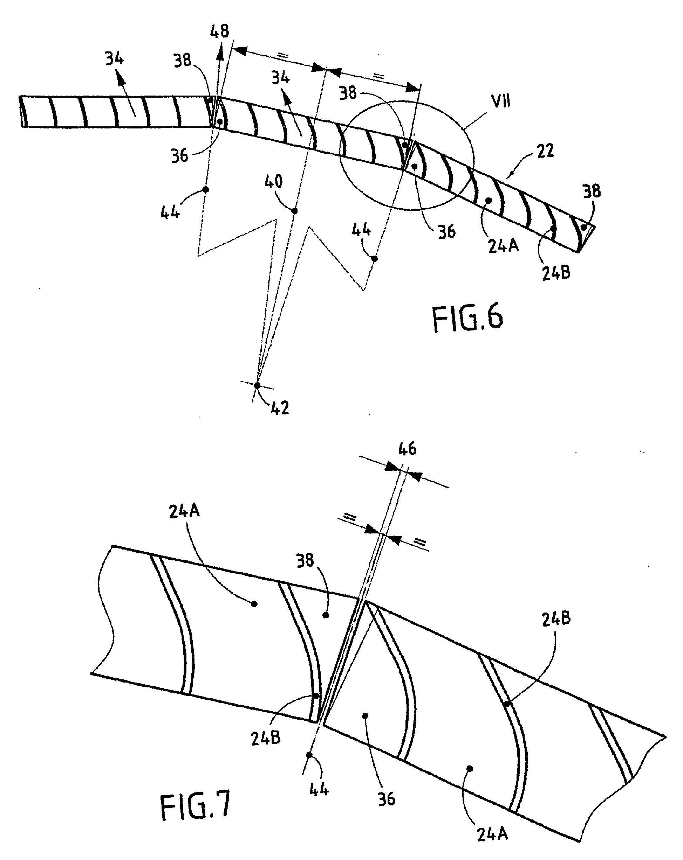

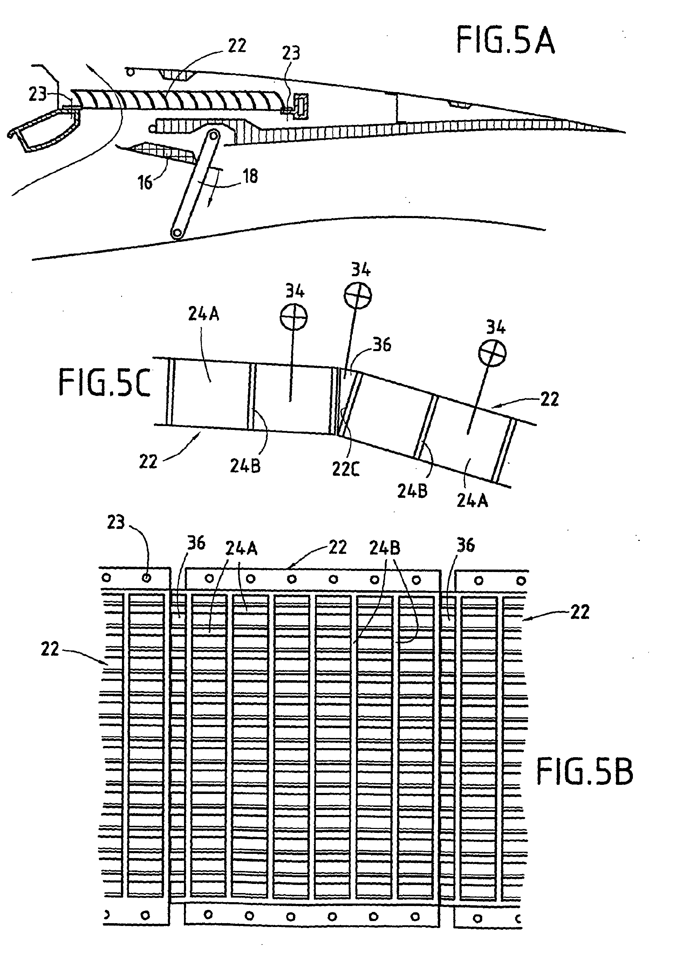

Un premier exemple de réalisation de l'invention appliquée à un inverseur de poussée à flux de sortie vers l'avant (c'est à dire dans une direction opposée au sens de poussée de l'avion) est illustré aux figures 5A à 5C. La figure 5A est une demi vue schématique, en coupe longitudinale, d'un inverseur de poussée à grilles de déflection dont le capotage est représenté en position semi-ouvert. La figure 5B est une vue partielle de dessus de la nacelle, capotage ouvert, découvrant les grilles de l'inverseur de poussée et la figure 5C montre en détail l'interface entre deux grilles adjacentes ou mitoyennes 22.

Selon l'invention, le dispositif à grilles (dit aussi à cascade) comporte des moyens pour rediriger vers l'avant (dans le sens du flux d'inversion) le flux parasite créé par la fuite d'air 32 et qui initialement était au mieux neutre ou pire générateur de poussée, de façon à augmenter l'efficacité du flux d'inversion. Pour ce faire, il est procédé à l'adjonction d'appendices aérodynamiques sous la forme de bouts d'aubes transversaux 36 montés sur un bord externe longitudinal 22C de chaque grille 22 de façon à combler l'espace résultant de la disposition circulaire du dispositif à grilles. Chaque grille est classiquement constituée par une pluralité d'aubes internes transversales 24A et d'aubes internes longitudinales 24B entrecroisées. Aussi, ces appendices additionnels sont avantageusement disposés dans le prolongement des aubes transversales 24A et présentent chacun une courbure identique à celle des aubes transversales. Ainsi, il est effectué une prise en compte immédiate de la fuite par les bouts d'aubes qui lui donne alors, comme pour ces aubes transversales, une direction vers l'avant de la nacelle. Toutefois, cette configuration n'est pas obligatoire et les bouts d'aubes 36 peuvent être disposés différemment, c'est à dire ne pas être alignés sur les aubes transversales. Le nombre de bouts d'aubes peut également être différent du nombre total des aubes transversales. La courbure de ces bouts d'aubes peut différer de celle des aubes transversales. Enfin, chaque bout d'aube peut présenter une configuration différente de son voisin de même que chaque espacement. En outre, cette adjonction de bouts d'aubes confère aux grilles une section transversale trapézoïdale comparativement à leur section rectangulaire initiale, augmentant ainsi la surface totale de passage d'air au travers de ces grilles.

La figure 6 est une vue représentant une section dans l'axe de la nacelle par un plan passant par les grilles d'un dispositif d'inversion de poussée à sortie sur le coté (c'est à dire dans une direction perpendiculaire au sens de poussée de l'avion).

Dans cette configuration, le dispositif à grilles comporte des moyens pour rediriger dans le sens du flux d'inversion le flux parasite créé par la fuite d'air 32. Ces moyens comportent des bouts d'aubes transversaux 36, 38 fixés sur les deux bords externes longitudinaux 22C de chaque grille 22 de façon à combler l'espace créé par le jeu longitudinal initial 31 résultant des incurvations des aubes transversales 24B. La découpe longitudinale des bouts d'aubes 36, 38 n'est plus parallèle à un axe 40 passant par le centre 42 de la nacelle et le centre de la grille 22 mais est maintenant parallèle à un axe 44 passant par le centre 42 de la nacelle et le milieu du jeu longitudinal résiduel 46. La grille 22 se présente ainsi plutôt avec une configuration en "trapèze" et non plus en parallélépipède, ce qui comme précédemment augmente légèrement la surface de guidage du flux.

Deux avantages apparaissent en outre dans cette configuration. Le premier est une fuite résiduelle 48 reportée à des dimensions comparables à une configuration de grilles à sortie vers l'avant. Le second est une prise en compte immédiate de cette fuite résiduelle par les bouts d'aubes qui par cet effet lui donne une direction parallèle au flux d'inversion, soit vers l'avant de la nacelle et non plus neutre ou génératrice de poussée. Les flux d'inversion 34 sortant des aubes directement mitoyennes à la fuite 48 sont par la même moins fortement perturbés. Il en résulte une meilleure efficacité de l'ensemble d'inversion permettant une réduction de la longueur de grilles, pour une même efficacité, comparée au concept sans aménagement des fuites. La masse de nombreux composants tel les vérins d'actionnement du capot mobile s'en trouve réduite et la fiabilité du système et des composants considérés augmentée.

De plus, on le voit sur la loupe de la figure 7, l'aube longitudinale 24B au contact du bout d'aube 38 bénéficie de l'extension trapézoïdale de la configuration de la grille 22 et augmente ainsi la surface totale de passage d'air au travers de cette grille. La zone de fuite initiale est ainsi comblée par des appendices appropriés améliorant la direction du flux d'inversion passant par ces fuites.

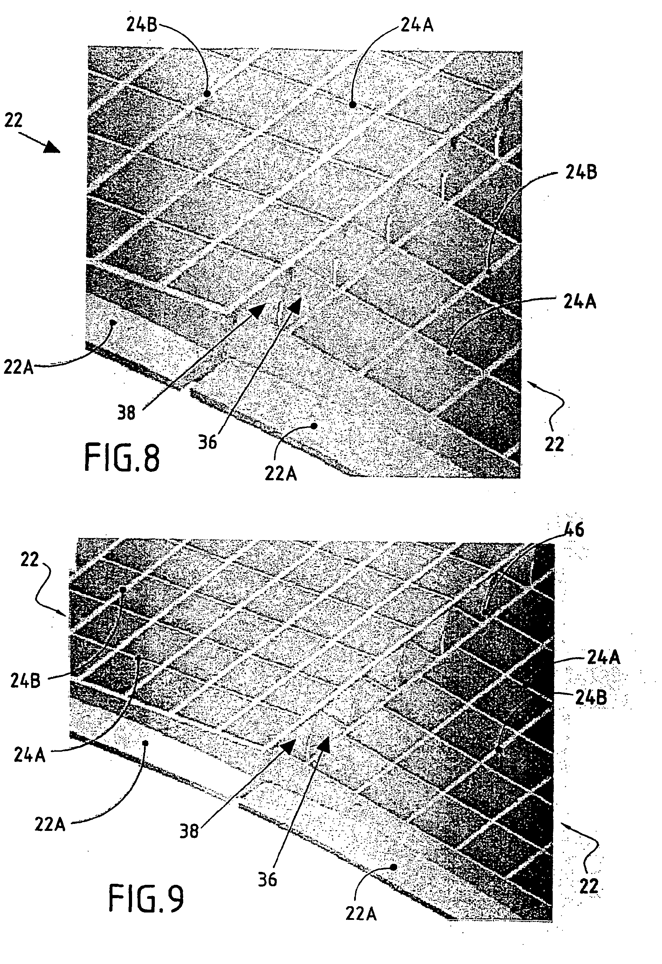

La figure 8 montre en perspective la disposition de deux grilles mitoyennes comme montrées dans les figures 6 et 7. Dans cette configuration, les bouts d'aubes transversaux 36, 38 sont représentés dans la continuité des aubes transversales 24A dites aussi internes. Toutefois, cette disposition des bouts d'aubes n'est pas obligatoire, du fait notamment que chaque définition d'aubage peut être différente d'une grille à l'autre. Ainsi, comme dans le mode de réalisation précédent, des bouts d'aubes 36 peuvent ne pas être alignées avec les bouts d'aubes 38. De même, on peut noter que les définitions des bouts d'aubes 36, 38 peuvent être spécifiques et différentes des aubes transversales 24A d'une même grille notamment en forme, nombre et disposition, ces paramètres étant choisis par l'homme de métier en fonction de l'effet recherché.

La figure 9 représente une solution à ce problème par une définition unique pour les bouts d'aubes transversaux 36, 38. Par cette configuration remarquable, les bouts d'aubes 36 appliqués sur n'importe quelle configuration de grille se retrouve toujours en correspondance avec les bouts d'aubes 38 de n'importe quelle autre configuration de grille, assurant ainsi une performance aérodynamique de la fuite optimale.

Un second exemple de réalisation de l'invention est illustré à la figure 10. En effet, on peut imaginer que pour une configuration de grille qui serait identique pour tout l'inverseur, la solution la mieux adaptée serait de fournir un unique ensemble de bouts d'aubes 50 pouvant être monté d'un côté ou de l'autre de la grille 22 et dimensionné de façon à correspondre à la largeur complète entre deux aubes longitudinales 24B de deux grilles mitoyennes, au jeu de montage et de tolérance près. La performance globale se trouve de ce fait encore renforcée avec une amélioration sensible en gain de masse et de fiabilité.

En outre, cette disposition peut s'appliquer aisément sur des configurations déjà en exploitation sans changer la structure des composants environnants. Le gain serait alors une amélioration sensible des performances d'inversion voire pour une même recherche d'efficacité d'inversion de l'inverseur avant mise en place de la panoplie, une possibilité d'utiliser le régime du moteur à un niveau inférieur habituellement utilisé, améliorant ainsi sa longévité.

## Revendications

1. Dispositif à grilles pour la formation d'un flux d'inversion (34) à partir d'un flux de poussée de turboréacteur, comportant une pluralité de grilles de dérivation de flux (22) disposées cote à cote à la périphérie externe d'un canal annulaire (14) de circulation du flux de poussée, chaque grille étant constituée par une pluralité d'aubes internes transversales (24A) et d'aubes internes longitudinales (24B) entrecroisées, deux grilles adjacentes étant séparées par un jeu latéral (30, 31) générant un flux de fuite (32), **caractérisé en ce qu'**il comporte des moyens pour rediriger ledit flux de fuite dans une direction augmentant l'efficacité dudit flux d'inversion.

2. Dispositif à grilles selon la revendication 1, **caractérisé en ce que** lesdits moyens pour rediriger le flux de fuite comportent des d'appendices aérodynamiques (36, 38) montés sur au moins un bord externe longitudinal (22C) de chaque grille.

3. Dispositif à grilles selon la revendication 2, **caractérisé en ce que** les appendices aérodynamiques (36, 38) sont montés sur les deux bords externes longitudinaux (22C) de chaque grille.

4. Dispositif à grilles selon la revendication 2 ou la revendication 3, **caractérisé en ce que** ledit bord externe longitudinal de grille est constitué par une aube longitudinale (24B).

5. Dispositif à grilles selon la revendication 2, **caractérisé en ce que** lesdits appendices aérodynamiques comportent une pluralité de bouts d'aubes transversaux (36, 38).

6. Dispositif à grilles selon la revendication 5, **caractérisé en ce que** chaque bout d'aube de ladite pluralité de bouts d'aubes transversaux d'une grille déterminée comporte une courbure identique à celle des aubes internes transversales (24A) de ladite grille.

7. Dispositif à grilles selon la revendication 5, **caractérisé en ce que** chaque bout d'aube de ladite pluralité de bouts d'aubes transversaux d'une grille déterminée comporte une courbure différente de celle des aubes internes transversales (24A) de ladite grille.

8. Dispositif à grilles selon la revendication 5, **caractérisé en ce que** chaque bout d'aube de ladite pluralité de bouts d'aubes transversaux d'une grille déterminée est disposé dans la continuité des aubes internes transversales (24A) de ladite grille.

9. Dispositif à grilles selon la revendication 5, **caractérisé en ce que** ladite pluralité de bouts d'aubes transversaux est disposée en nombre différent par rapport aux aubes internes transversales (24A) d'une même grille.

10. Dispositif à grilles selon la revendication 5, **caractérisé en ce que** le nombre et la courbure de ladite pluralité de bouts d'aubes transversaux sont identiques pour toutes les grilles du dispositif quels que soient le nombre et la courbure des aubes internes transversales.

11. Inverseur de poussée de turboréacteur à double flux comportant un dispositif à grilles selon l'une quelconque des revendications 1 à 10.

## Claims

1. Cascade device for the formation of a reversal flow (34) from a thrust flow of a turbojet engine, comprising a plurality of flow diverter cascades (22) arranged side-by-side on the external periphery of an annular duct (14) for circulating the thrust flow, each cascade consisting of a plurality of transverse internal vanes (24A) and longitudinal internal vanes (24B) crossing one another, two adjacent cascades being separated by a lateral clearance (30, 31) generating a leakage flow (32), **characterised in that** it comprises means for redirecting said leakage flow in a direction increasing the effectiveness of said reversal flow.

2. Cascade device according to Claim 1, **characterised in that** said means for redirecting the leakage flow comprise aerodynamic appendages (36, 38) mounted on at least one longitudinal external edge (22C) of each cascade.

3. Cascade device according to Claim 2, **characterised in that** the aerodynamic appendages (36, 38) are mounted on the two longitudinal external edges (22C) of each cascade.

4. Cascade device according to Claim 2 or Claim 3, **characterised in that** said longitudinal external edge of the cascade consists of a longitudinal vane (24B).

5. Cascade device according to Claim 2, **characterised in that** said aerodynamic appendages comprise a plurality of transverse vane tips (36, 38).

6. Cascade device according to Claim 5, **characterised in that** each vane tip of said plurality of transverse vane tips of a given cascade, has an identical curvature to that of the transverse internal vanes (24A) of said cascade.

7. Cascade device according to Claim 5, **characterised in that** each vane tip of said plurality of transverse vane tips of a given cascade, has a different curvature from that of the transverse internal vanes (24A) of said cascade.

8. Cascade device according to Claim 5, **characterised in that** each vane tip of said plurality of transverse vane tips of a given cascade is arranged in the continuation of the transverse internal vanes (24A) of said cascade.

9. Cascade device according to Claim 5, **characterised in that** said plurality of transverse vane tips is arranged in a different number relative to the transverse internal vanes (24A) of the same cascade.

10. Cascade device according to Claim 5, **characterised in that** the number and the curvature of said plurality of transverse vane tips are identical for all the cascades of the device, regardless of the number and curvature of the transverse internal vanes.

11. Thrust reverser for a bypass turbojet engine comprising a cascade device according to any one of Claims 1 to 10.

## Patentansprüche

1. Gittervorrichtung zur Bildung einer Umkehrströmung (34) aus einer Schubströmung eines Turboluftstahltriebwerks, mit einer Mehrzahl an Strömungsumlenkgittern (22), die nebeneinander an dem äußeren Umfang eines ringförmigen Kanals (14) für eine Zirkulation der Schubströmung angeordnet sind, wobei jedes Gitter aus einer Mehrzahl an inneren Querschaufeln (24A) und inneren Längsschaufeln (24B) gebildet ist, die zueinander gekreuzt sind, wobei zwei benachbarte Gitter durch einen seitlichen Spalt (30, 31) getrennt sind, der eine Verlustströmung (32) erzeugt, **dadurch gekennzeichnet, dass** sie Mittel zum Zurückleiten der Verlustströmung in eine Richtung aufweist, die die Wirksamkeit der Umkehrströmung vergrößert.

2. Gittervorrichtung nach Anspruch 1, **dadurch gekennzeichnet, dass** die Mittel zum Zurückleiten der Verlustströmung aerodynamische Ansatzstücke (36, 38) aufweisen, die an zumindest einer äußeren Längskante (22C) jedes Gitters angebracht sind.

3. Gittervorrichtung nach Anspruch 2, **dadurch gekennzeichnet, dass** die aerodynamischen Ansatzstücke (36, 38) an den zwei äußeren Längskanten (22C) jedes Gitters angebracht sind.

4. Gittervorrichtung nach Anspruch 2 oder 3, **dadurch gekennzeichnet, dass** jede äußere Längskante des Gitters durch eine Längsschaufel (24B) gebildet ist.

5. Gittervorrichtung nach Anspruch 2, **dadurch gekennzeichnet, dass** die aerodynamischen Ansatzstücke eine Mehrzahl an Querschaufelenden (36, 38) aufweisen.

6. Gittervorrichtung nach Anspruch 5, **dadurch gekennzeichnet, dass** jedes Schaufelende der Mehrzahl der Querschaufelenden eines bestimmten Gitters eine Krümmung aufweist, die identisch zu derjenigen der inneren Querschaufeln (24A) des Gitters ist.

7. Gittervorrichtung nach Anspruch 5, **dadurch gekennzeichnet, dass** jedes Schaufelende der Mehrzahl der Querschaufelenden eines bestimmten Gitters eine Krümmung aufweist, die verschieden zu derjenigen der inneren Querschaufeln (24A) des Gitters ist.

8. Gittervorrichtung nach Anspruch 5, **dadurch gekennzeichnet, dass** jedes Schaufelende der Mehrzahl der Querschaufelenden eines bestimmten Gitters in stetiger Fortsetzung zu den inneren Querschaufeln (24A) des Gitters angeordnet ist.

9. Gittervorrichtung nach Anspruch 5, **dadurch gekennzeichnet, dass** die Mehrzahl der Querschaufelenden im Vergleich zu den inneren Querschaufeln (24A),eines selben Gitters in unterschiedlicher Anzahl angeordnet ist.

10. Gittervorrichtung nach Anspruch 5, **dadurch gekennzeichnet, dass** die Anzahl und die Krümmung der Mehrzahl der Querschaufelenden unabhängig von der Anzahl und der Krümmung der inneren Querschaufeln für alle Gitter der Vorrichtung identisch sind.

11. Schubumkehrvorrichtung eines Zweistrom-Turboluftstrahltriebwerks, mit einer Gittervorrichtung nach einem der Ansprüche 1 bis 10.
